(19) Europäisches Patentamt

European Patent Office

Office européen des brevets

(11) EP 0 430 075 B1

## (12) EUROPEAN PATENT SPECIFICATION

(45) Date of publication and mention
of the grant of the patent:
**09.02.2000 Bulletin 2000/06**

(51) Int. Cl.[7]: **H04N 1/40**

(21) Application number: **90122321.4**

(22) Date of filing: **22.11.1990**

(54) **Image recording apparatus using recording head**

Bildaufzeichnungsgerät mit Aufzeichnungskopf

Dispositif d'enregistrement d'images avec tête d'enregistrement

(84) Designated Contracting States:
**DE FR GB IT**

(30) Priority: **22.11.1989 JP 30196689**
**22.11.1989 JP 30196489**
**01.03.1990 JP 4716390**

(43) Date of publication of application:
**05.06.1991 Bulletin 1991/23**

(73) Proprietor:
**CANON KABUSHIKI KAISHA**
**Tokyo (JP)**

(72) Inventors:
• **Suzuki, Akio,**
**c/o Canon Kabushiki Kaisha**
**Ohta-ku, Tokyo (JP)**
• **Takekoshi, Nobuhiko,**
**c/o Canon Kabushiki Kaisha**
**Ohta-ku, Tokyo (JP)**
• **Danzuka, Toshimitsu,**
**c/o Canon Kabushiki Kaisha**
**Ohta-ku, Tokyo (JP)**

(74) Representative:
**Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
**EP-A- 0 288 044** **EP-A- 0 317 268**
**US-A- 4 827 281**

• **PATENT ABSTRACTS OF JAPAN vol. 12, no. 487 (M-778)20 December 1988 & JP-A-63 209 954 ( OKI ELECTRIC )**

**Description**

The present invention relates to an image recording apparatus such as a printer, a facsimile machine or a copying machine using a recording head unit for recording characters and images on a recording material such as paper in accordance with an image input signal, more particularly to an image recording apparatus for recording images or the like using a recording head unit having a plurality of image recording elements.

Examples of such an image recording apparatus include a dot type such as an ink jet printer or a thermal transfer printer or the like using a recording head. Such an apparatus effects the recording using digital signals, and therefore, becomes widely used together with wider use of digital office equipment such as wordprocessors or personal computers.

EP-A-0 317 268 discloses an image recording apparatus comprising a plurality of multi-nozzle heads for forming an image according to input image forming signals, a memory means for storing data corresponding to image forming characteristics of each of the multi-nozzle heads, and a corrector means for correcting the image forming signals based on the data stored in the memory means.

In the recording apparatus using the recording head, the level of image quality (print quality) is largely influenced by recording density and tone reproducibility.

The recording density may be improved by increasing the density of the image recording elements. However, it is not easy to produce a recording head having an ideal tone characteristics. Therefore, an image recording apparatus having a function of correcting cone reproducibility of the recording head is provided.

However, in such conventional examples, a tone correcting curve is used, and is fixed to an average level. If the tone characteristics of the recording head are not uniform, then a problem arises, that is, the tone correction is not optimum for all of the recording head. Particularly, when the color image recording operation is effected using plural recording heads for different colors, the color balance becomes different due to the difference in the tone reproducibility, and therefore, the problem is significant.

The recording head usually is of a multi-type head having plural image recording elements at a high density in order to increase the recording speed. In an ink jet recording head, for example, a multi-nozzle type head is used wherein plural nozzles are disposed at a high density. A thermal head in the thermal printer has usually plural heaters.

However, it is difficult to produce uniform image recording elements in the multi-type head with the result of a certain degree of non-uniformity in the characteristics of the image recording elements. For example, in the case of the ink jet type multi-head, the configurations or the like of the nozzles are not uniform. In the multi-type head in the thermal printer, the resistances or the configurations of the heaters are not uniform. If the characteristics of the image recording elements are not uniform, the sizes and the densities of the dots provided by the image recording elements become non-uniform with the result of density non-uniformity in the image recorded.

In order to solve the problem, a proposal has been made wherein the signals supplied to the respective image recording elements are corrected in an attempt to provide the uniform densities of the recorded image. In this system, for example, the input signals are corrected to supply a high level signal to the image recording elements having low densities and low level signals to the recording elements having high densities. With this method, when the recording system is such that the recorded dot diameter of the density thereof is changeable, the size of the recorded dot of each of the image recording elements is changed in accordance with the level of the input. For example, in the ink jet recording system of piezoelectric type, the driving voltage or the driving voltage pulse width supplied to the piezoelectric elements are changed in accordance with the input signal.

In the thermal transfer type, the driving voltage or the pulse width thereof supplied to each of the heaters is changed in accordance with the input signal. By doing so, the dot size or the dot density by the recording element is made uniform, so that the uniform density distribution is provided.

Where the dot diameter or the dot density are not changeable or is changeable only with substantial difficulty, the number of dots is changed in accordance with the input signal. Then, a larger number of dots are recorded by the image recording element having the property of low density, and a smaller number of dots are recorded by the image recording element having the property of high density. As a result, the density distribution is made uniform.

Using such methods, it is possible to correct the density non-uniformity. However, even if so, if the recording head has non-uniform tone reproducing properties, it is not possible to provide an optimum tone correction for all of the recording heads.

In such a method, even if the non-uniformity is corrected once, the amounts of correction is required to be changed if the non-uniformity property changes thereafter.

In the case of the ink jet recording type, precipitation of ink is deposited adjacent ink ejection outlets with use of the recording head, or foreign matter is deposited externally, with the result of change in the density distribution. In the thermal transfer type, the heaters are deteriorated with the result of density distribution changes.

If they occur, the density non-uniformity correction at the initial setting becomes insufficient, so that the non-uniformity becomes conspicuous with use of the recording head.

As for a known method for solving the problem, the density non-uniformity distribution is periodically detected to re-correct the density non-uniformity correcting data. With this method, even if the density non-uniformity distribution of the recording head changes, the correction data are changed in accordance with the change, and therefore, uniform images can be provided at all times.

In this method, the correcting data are produced in the machine actually used in the offices or the like, so that, the time required for the production on the correcting data is desired to be very short in order to reduce the inoperable period of the machine. However, the effect of correction is not satisfactory when the detection of the non-uniformity and the production of the correcting data are carried out only once. Sometimes, several; ten and several such operations had to be carried out to obtain the uniform image.

The inventors have found that the cause of the problem is in the differences of the tone reproducibilities in the individual recording heads. More particularly, even if a predetermined amount of correction is imposed, the actual corrections of the non-uniformity is different if the tone reproducibility is different.

Where the tone reproducibilities of the recording head are different, the required amount of correction is different, and therefore, the correction of the density non-uniformity is not sufficient only with one or two detection and correction operations, with the result that a large number of detecting and correcting operations have to be carried out.

Accordingly, it is a principal object of the present invention to provide an image recording apparatus with which the recording operation is carried out at all times with good tone reproducibility irrespective of the variation in the tone reproducibility of the recording head and irrespective of the time of use.

It is another object of the present invention to provide an image recording apparatus in which the image quality is improved and stabilized irrespective of the variation in the tone reproducibility of the recording head and the time of use.

It is a further object of the present invention to provide an image recording apparatus capable of effecting good recording without density non-uniformity irrespective of the variation in the tone reproducibility of the recording head and the time of use.

It is a further object of the present invention to provide an image recording apparatus in which even if the density non-uniformity of the recording head changes with use, the density non-uniformity can be corrected quickly.

According to the present invention, there is provided an image recording apparatus having the features indicated in claim 1. The invention is further developed by the features mentioned in the subclaims.

These and other objects, features and advantages of the present invention will become more apparent upon a consideration of the following description of the preferred embodiments of the present invention taken in conjunction with the accompanying drawings.

Figure 1 is a block diagram of a circuit used in an image recording apparatus according to a first embodiment of the present invention.

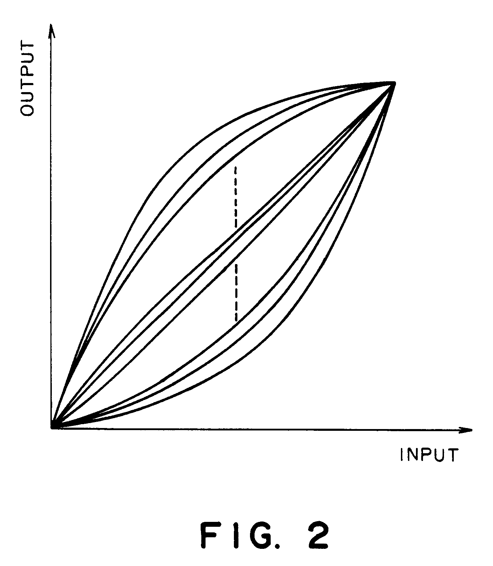

Figure 2 is a graph showing an example of the tone correcting curve used in the embodiment of the present invention.

Figure 3 is a block diagram of a circuit used in an image recording apparatus according to a second embodiment of the present invention.

Figure 4 is a flow chart showing the control steps in an image recording apparatus according to a second embodiment of the present invention.

Figure 5 shows an example of a test pattern (tone characteristics measuring pattern) used in the recording apparatus according to the second embodiment.

Figure 6 is a block diagram of a circuit used in an image recording apparatus according to a third embodiment of the present invention.

Figure 7 is a flow chart showing control steps in the apparatus according to the third embodiment of the present invention.

Figure 8 illustrates a density non-uniformity correcting method.

Figure 9 shows an example of the density non-uniformity.

Figure 10 shows an example of a relation between the image signal and the image density.

Figure 11 illustrates the correction of the density non-uniformity.

Figure 12 is a block diagram of a circuit used in a fourth embodiment of the present invention.

Figure 13 shows an example of the density non-uniformity correcting curve,

Figures 14 and 15 illustrate tone characteristics correction.

Figure 16 is a flow chart showing the density non-uniformity correcting steps used in a fourth embodiment of the present invention.

Figure 17 is a block diagram of a circuit used in an image recording apparatus according to a fifth embodiment of the present invention.

Figure 18 is a block diagram of a circuit used in an image recording apparatus according to a sixth embodiment of the present invention.

Figure 19 is a block diagram of a circuit used in an image recording apparatus according to a seventh embodiment of the present invention.

Figure 20 shows the tone reproducibility (characteristics) of two different nozzles.

Figure 21 shows the tone characteristics of the two nozzles when the non-uniformity corrected by the density non-uniformity correcting method.

Figure 22 is a block diagram of a circuit used in an image recording apparatus according to an eighth embodiment of the present invention.

Figure 23 is a block diagram of a circuit used in an image recording apparatus according to an ninth embodiment of the present invention.

Figure 24 illustrates a tone characteristics correction and a density non-uniformity correction.

Figure 25 is a block diagram of a circuit used in a conventional image recording apparatus.

Figures 26 to 28 illustrate tone characteristics correction.

Figure 29 illustrates a density non-uniformity correction when a density non-uniformity distribution changes.

Referring to the accompanying drawings, preferred embodiments of the present invention will be described in conjunction with the accompanying drawings.

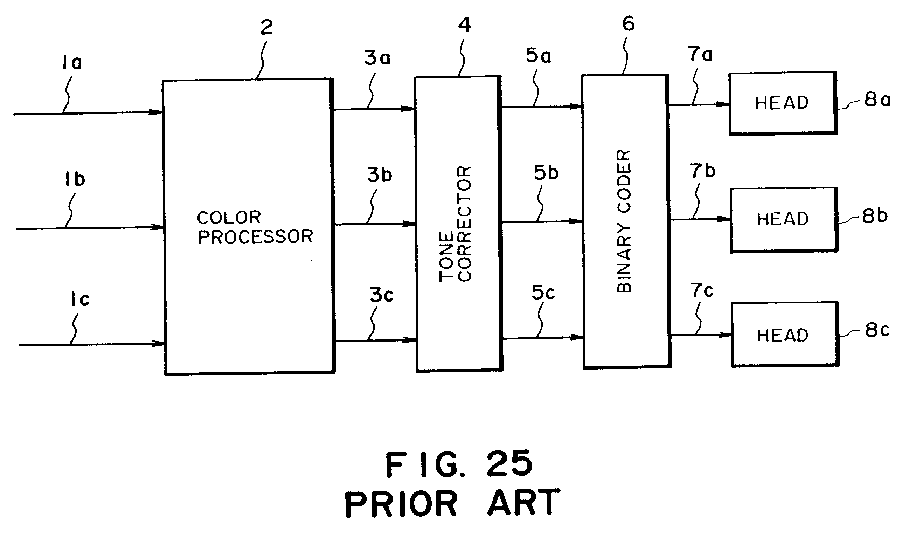

Before dealing with the embodiments, the description will be made as to the circuit structure for the tone characteristics correction in a conventional image recording apparatus, referring to Figure 25.

In Figure 25, input signals 1a, 1b and 1c for the cyan (C), magenta (M) and yellow (Y) components are subjected to a color correcting process such as masking or the like by a color processor 2. Thereafter, the processed signals 3a, 3b and 3c are subjected to a tone characteristics correction by a tone corrector 4 to correct the tone characteristics of the recording head. The multi-level signals 5a, 5b and 5c provided after the tone correction, are converted to binary level signals by a binary coding processor 6 using a dither method or error dispersion method. The three color signals 7a, 7b and 7c after being binary-coded, are supplied to the respective color (cyan, magenta and yellow) recording head 8a, 8b and 8c. The recording heads 8a, 8b and 8c record a color image on recording paper in accordance with the input signals 7a, 7b and 7c.

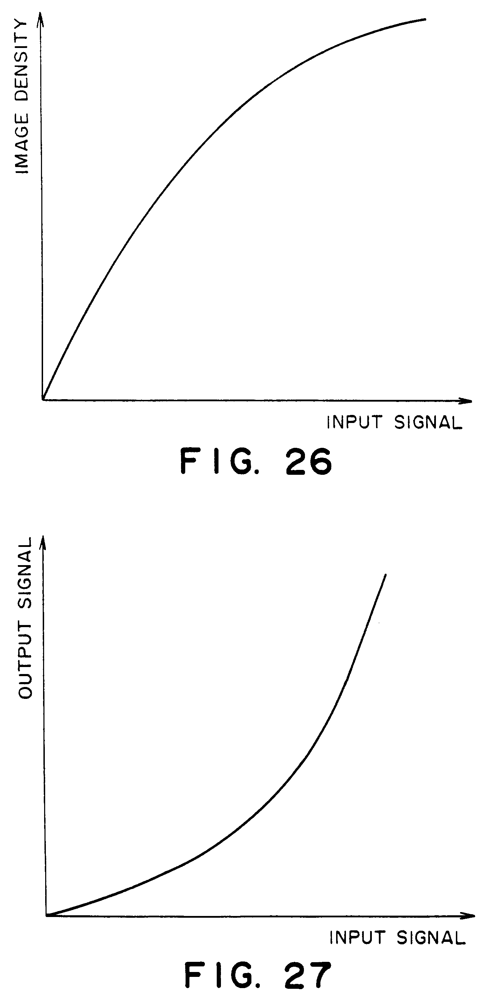

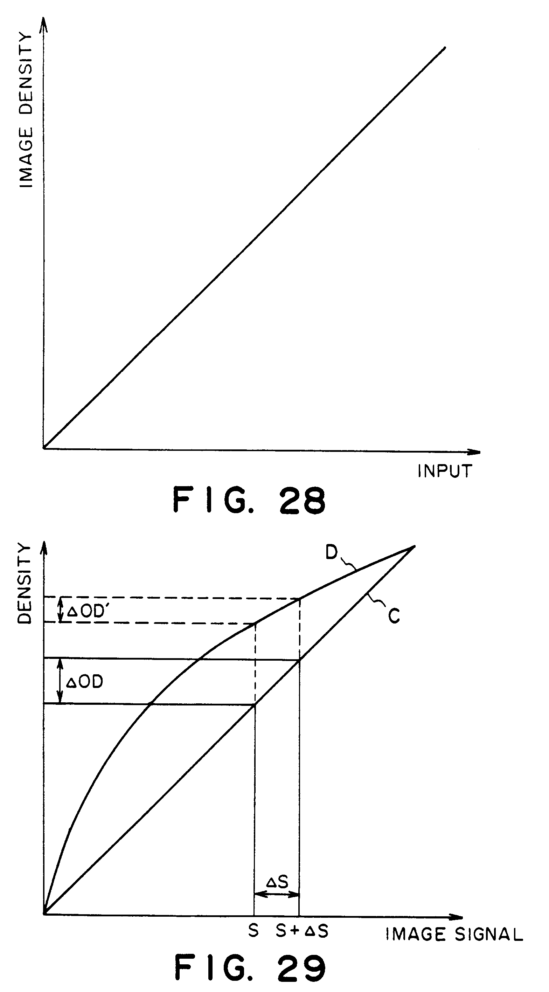

It is assumed that the recording heads 8a, 8b and 8c have the tone characteristics (reproducibility) as shown by the curve of Figure 26. It will be understood that the tone is saturated at the high density portion with the result of poor image quality. Therefore, the tone corrector 4 imposes correction to the input signal in accordance with the tone correcting curve shown in Figure 27, by which the tone characteristics of each of the recording heads 8a, 8b and 8c for each of the input signals 1a, 1b and 1c is changed to have an ideal linearlity as shown in Figure 28, and therefore, a good image with good tone reproducibility can be obtained.

However, with this structure, the tone correcting curve is fixed, and therefore, it is not possible to effect the optimum tone correction for all of the recording heads.

Embodiment 1

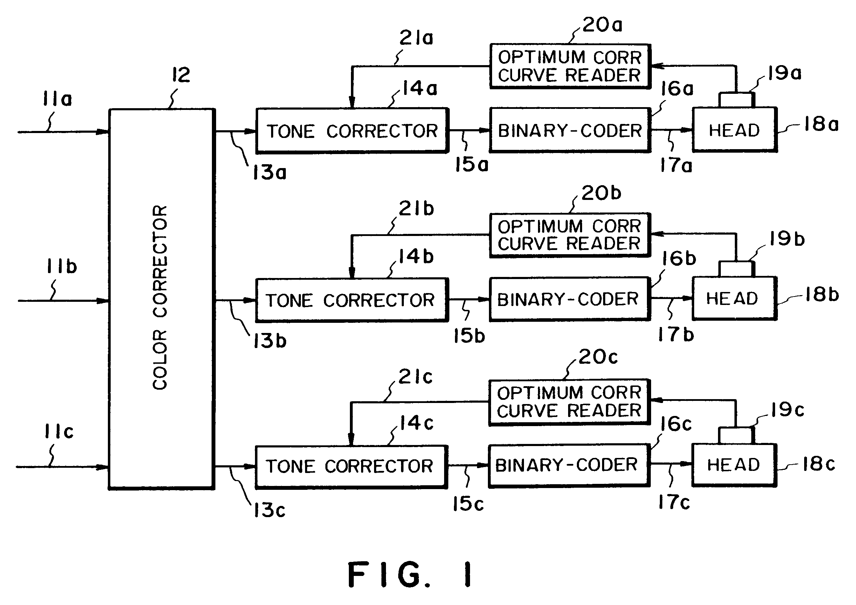

Referring now to Figure 1, there is illustrated a first embodiment of the present invention to provided a solution to the above-described problems with the conventional image recording apparatus.

In this Figure, reference numerals 11a, 11b and 11c designate input image signals for the cyan, magenta and yellow components, respectively. The apparatus comprises a color corrector 12 for effecting color correction process such as masking or the like to the input signals 11a, 11b and 11c to produce color-corrected image signals 13a, 13b and 13c, and tone correctors 14a, 14b and 14c for correcting the tone characteristics of the recording head to the image signals 13a, 13b and 13c to produce tone-corrected image signals 15a, 15b and 15c. The apparatus further comprises binary codes 16a, 16b and 16c for converting the tone-corrected image signals 15a, 15b and 15c by the dithering method or error dispersion method or the like to produce binary level signals 17a, 17b and 17c, and cyan, magenta and yellow recording heads for effecting color image recording in accordance with binary level image signals 17a, 17b and 17c.

Information displays 19a, 19b and 19c is provided on each of the recording heads 18a, 18b and 18c to represent optimum tone characteristics correcting curves, respectively. The displays or indexes 19a, 19b and 19c may be in the form of data in a ROM, a variable resistance, a mark, a bar-code, a notch or the like. Readers 20a, 20b and 20c read the information of the optimum tone characteristics correcting curve information of the indexes 19a, 19b and 19c. The readers 20a, 20b and 20c may be a memory reading circuit type, an optical type (a photocoupler, for example), a mechanical type (microswitch, for example), a magnetic type (magnetic sensor, for example) or the like. The readers 20a, 20b and 20c produce correcting curve selection signals 21a, 21b and 21c, which are supplied to the tone characteristics correctors 14a, 14b and 14c.

In operation, the input signals 11a, 11b and 11c for the cyan, magenta and yellow color components supplied to the apparatus, are subjected to the color correcting process such as masking or the like by the color corrector 12, and is thereafter supplied into the tone correctors 14a, 14b and 14c. The tone correctors 14a, 14b and 14c, has a ROM (read only memory, storing a plurality of (20, for example) tone correcting curves having different curvatures, which are selected in accordance with reading addresses on the basis of the input signal.

The indexes 19a, 19b and 19c having information indicative of the optimum tone correcting curves for the respective recording heads 18a, 18b and 18c carry the levels corresponding to the optimum correcting curves (curve selecting number) in accordance with the tone characteristics of the respective recording heads in the form of data in the ROM or a resistance of a variable resistor. The levels are pre-set when it is distributed from the factory. The optimum tone characteristics correcting curve information readers 20a, 20b and 20c read the set levels, and control signals (correcting curve selection signal) 21a, 21b and 21c in accordance with the detected levels are supplied to the addresses of the ROM of the tone characteristics correctors 14a, 14b and 14c so as to select the optimum correcting curve. The ROMs of the tone characteristics correctors 14a, 14b and 14c produces tone characteristics corrected signals using reading signals provided by combination of the signals 21a, 21b and 21c and the input signals 13a, 13b and 13c as the upper address and the lower address, respectively.

As a result, the image signals 13a, 13b and 13c are subjected to proper tone correction at all times in accordance with the tone characteristics of the recording head in the tone correctors 14a, 14b and 14c.

The tone corrected signals 15a, 15b and 15c are converted to two level signals by the binary coding processors 16a, 16b and 16c using a dither method or an error dispersion method into two level signals, and thereafter, are supplied to the recording heads 18a, 18b and 18c, respectively, so as to effect the color image recording.

As described in the foregoing, according to the present invention, the tone correction is possible with the optimum correcting curves matching the tone characteristics of the respective recording heads. Therefore, color images can be provided at all times with good tone reproducibility and with good color balance.

Particularly when the present invention is used in an image recording apparatus wherein the recording head is exchangeable as in a cassette type ink jet printer, the tone reproducibility is always maintained good even if the recording heads are changed.

Embodiment 2

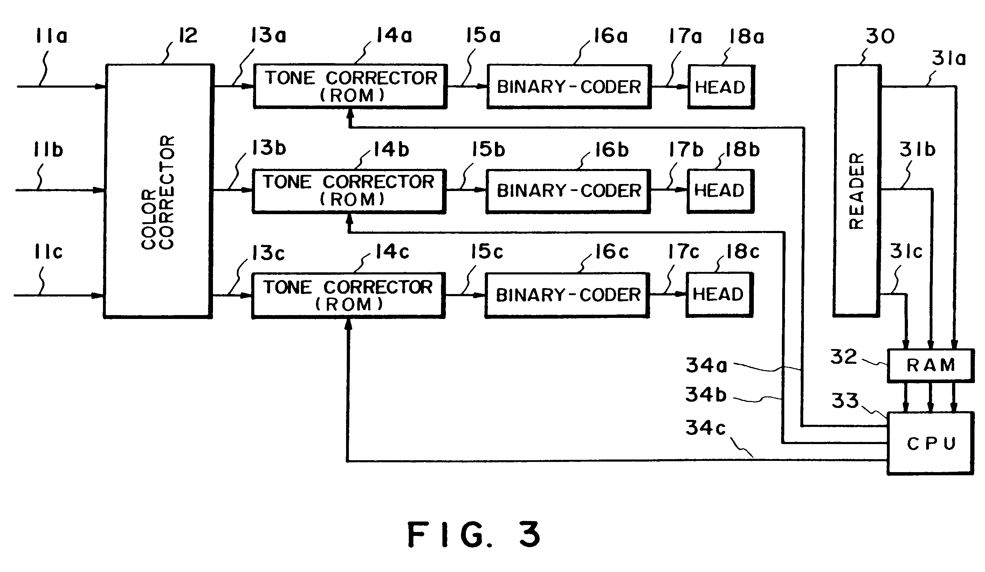

Figure 3 shows the circuit structure used in a second embodiment of the present invention. The same reference numerals as in Figure 1 are assigned to the elements having the corresponding functions, and the detailed description thereof are omitted for simplicity.

In Figure 3, reference numeral 30 designates an image reader having a solid state image pickup element such as CCD (charge coupled device) to read tone (density) of three colors, red, green, blue recorded on recording paper on recording heads 18a, 18b and 18c. Reference numerals 31a, 31b and 31c represent read signals for the red, green and blue colors produced from the image reader 30. A RAM (random access memory) stores the read signals 31a, 31b and 31c. A CPU (central processing unit) 33 performs a predetermined processing on the basis of the output signal from the RAM 32. References 34a, 34b and 34c designate correcting curve selection signals produced by the CPU 33. The correcting curve selecting signals 34a, 34b and 34c are supplied to the tone correctors 14a, 14b and 14c.

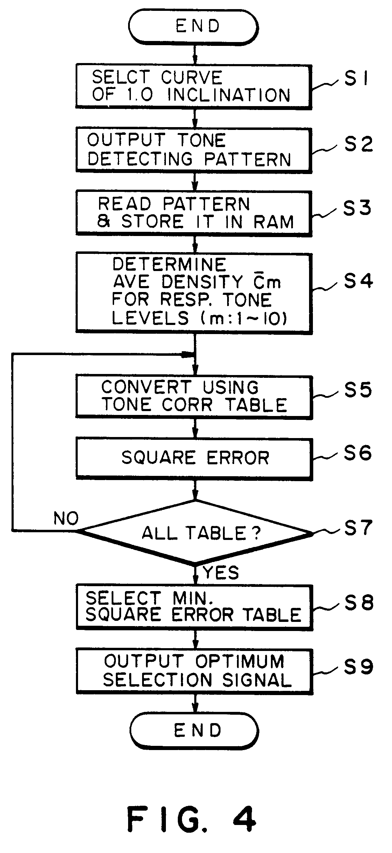

Referring to Figure 4 (flow chart), the control operation of the CPU 33 in this embodiment will be described.

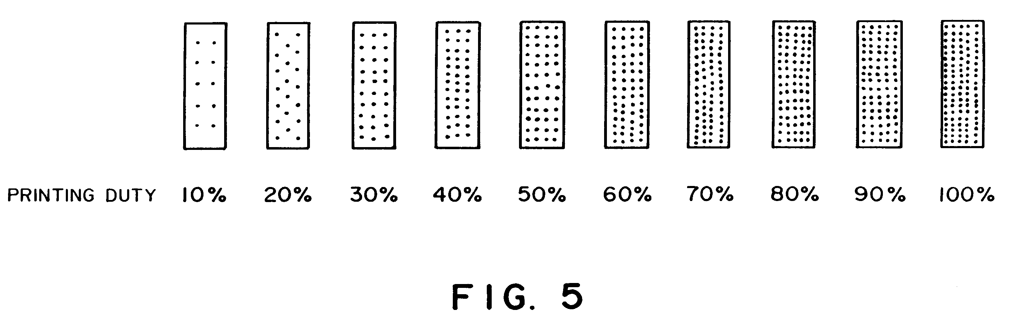

First, the correction curve selecting signal 14a, 14b and 14c select a line having an inclination of 1.0 (at step S1). Then, in response to a signal from a tone characteristics detecting pattern generator (not shown), the recording heads 18a, 18b and 18c record on the recording sheet predetermined tone characteristic detecting pattern, at step S2. An example of the tone characteristics detecting pattern is shown in Figure 5. As will be understood, it comprises plural patterns having different tone levels, and the record duty (percentage of the record) for each color changes from 10 - 100 % (solid) with increment of 10 %, and therefore, at 10 steps.

Subsequently, the image reader 30 reads the output pattern, and the read signals for the respective tones are stored in the RAM 32 (at step S3). Then, the read signals from the RAM 32 are converted to densities and averaged to provide average densities $\overline{C}m$ (m = 1 - 10) for the respective tone levels (step S4). The average density $\overline{C}m$ is converted using a tone correcting table stored in the RAM of the CPU 33 (at step S5). Then, the error square between the tone levels provided by the table conversion and the ideal line is calculated, at step S6.

That is,

$$E = \sum_{m-1}^{10} (\overline{C}'m - Com)^2$$

where the average density for each of the tone levels after the table conversion is $\overline{C}'m$ (m = 1 - 10), and the value of the ideal line is Com, and E is the error square.

Then, the description is made at step S7 as to whether the calculations are performed for all of 20 tone correcting curves. If not, the step S5 is executed. If so, a tone correcting curve providing minimum error square is obtained, at step S8. On the basis of the discrimination, selection signals 34a, 34b and 34c indicative of the optimum tone correcting curves are supplied to the tone correctors 14a, 14b and 14c, respectively, at step S9.

By doing so, even if the tone reproducing characteristics of the recording heads 18a, 18b and 18c change with time of use, the optimum tone correcting curves are selected at all times, and therefore, the good image quality can be maintained.

In this embodiment, the reading operation for the correcting pattern recorded on the recording sheet may be carried out by the user or a service men. At this time, the record output of the pattern may be placed on the reader. It is a possible alternative that an addicted reader sensor may be provided on a recording sheet conveying passage, so that the sensor automatically reads the output pattern.

Embodiment 3

In this embodiment, the tone characteristics of the recording heads are actually measured in the apparatus, and on the basis of the results of the measurement, optimum correcting curves are produced by the CPU, and the correcting curves thus obtained are used.

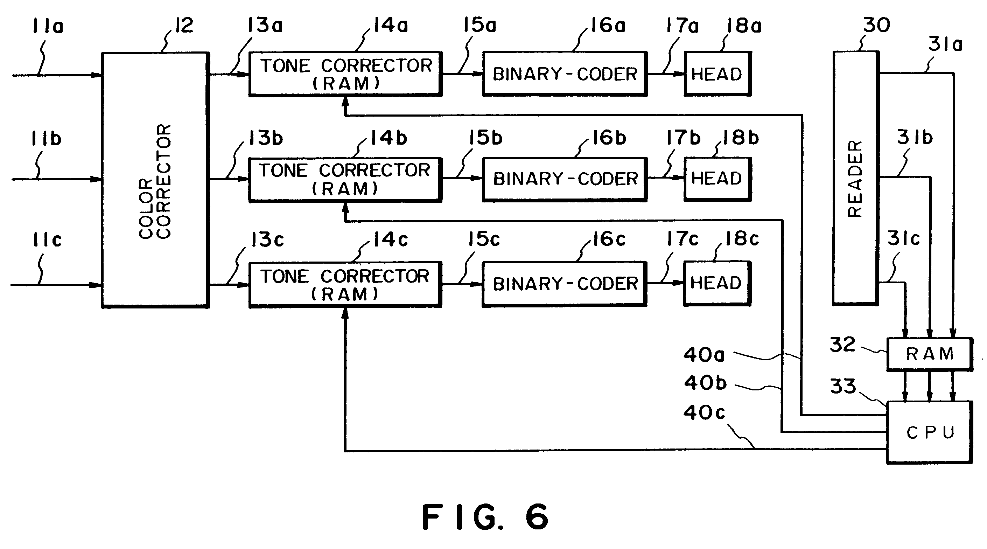

Figure 6 shows the structure of the circuit used in this embodiment. In this embodiment, the tone correctors 14a, 14b and 14c comprise RAMs rather than ROMs. Reference numerals 40a, 40b and 40c are not correcting curve selecting signals but are the data of the correcting curve. They are the prints in which this embodiment is different from the second embodiment.

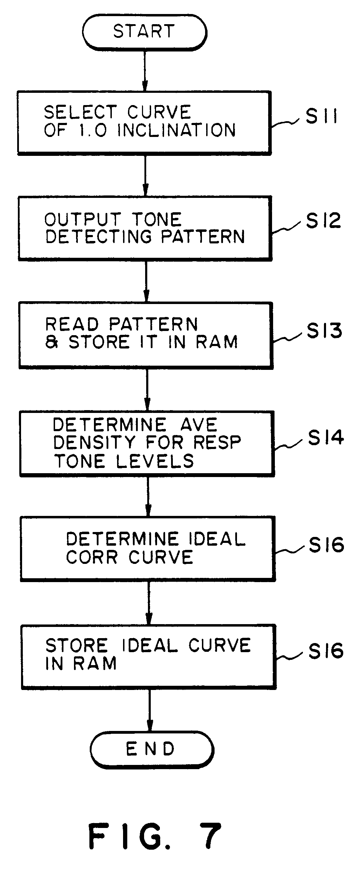

Referring to Figure 7 (flow chart), the process steps in this embodiment will be described. The steps S11 - S14 are the same as the steps S1 - S4 of the above-described second embodiment. At step S15, the ideal tone correcting curve is calculated out on the basis of the average density $\overline{C}m$ for the respective tone levels obtained by the measurement.

At step S16, the data 40a, 40b and 40c for the ideal correcting curves provided by the calculation are stored in the RAM of the tone correctors 14a, 14b and 14c.

By doing so, the tone correction becomes optimum at all times for the recording heads having any tone characteristics.

In this embodiment, the indexes 19a, 19b and 19c indicative of the information relating to the optimum tone correcting curves of Figure 1 are in the form of a ROM or a variable resistor. They may be in the form of switches having plural stages. In another alternative, a pit and projection configurations formed at parts of the recording heads 18a, 18b and 18c are changed in accordance with the optimum curves. When they are engaged with the recording apparatus, a microswitch or a photocoupler produces a control signal in accordance with the configuration. The indexes 19a, 19b and 19c are not necessarily integral with the recording heads. For example, a separate ROM storing the tone correcting curve information may be prepared, for example, and the ROM is also mounted in the apparatus when the recording head is mounted.

In the foregoing embodiments, the description has been made in the case of the color image recording apparatus for providing a color image using cyan, magenta and yellow. However, the present invention is applicable to a monochromatic image recording apparatus with the same advantageous effects.

Embodiment 4

Now, an embodiment will be described wherein a density non-uniformity is corrected. Before describing the embodiment, a brief description will be made as to the density non-uniformity correction.

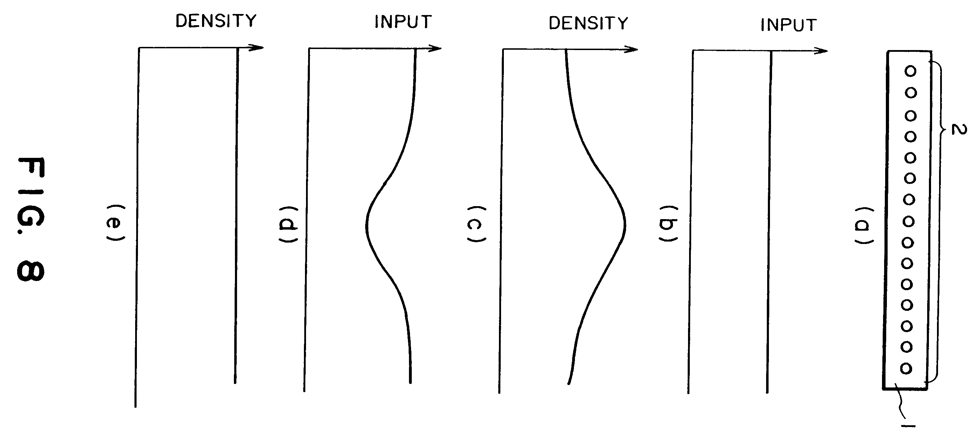

Referring to Figure 8A, recording elements 2 are disposed in a line (multi-type head 1). When the input signals having uniform levels (Figure 8B) are supplied to the image recording elements, the density non-uniformity occurs as shown in Figure 8C. The input signals are corrected as shown in Figure 8D, so that the large input is supplied to the low density recording elements, whereas the smaller input is supplied to the high density recording elements. By doing so, the density distribution is made uniform as shown in Figure 8E.

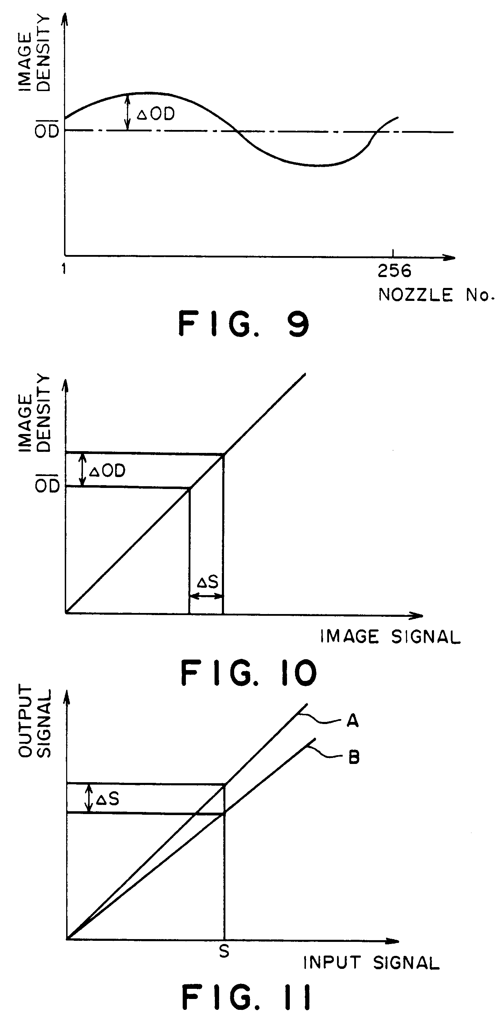

An example of obtained the correction amount is as follows. A multi-type head having 256 nozzles is taken as an example. When the recording is effected with a uniform level image signal S, the density non-uniformity distribution is as shown in Figure 9. An average density OD of the recorded images by the 256 nozzles are obtained.

(1) An average density OD of the record by 256 nozzles is obtained.
(2) The image densities OD1 - OD256 are measured for the respective nozzles.
(3) $\Delta ODn = OD - ODn$  (n = 1 - 256).

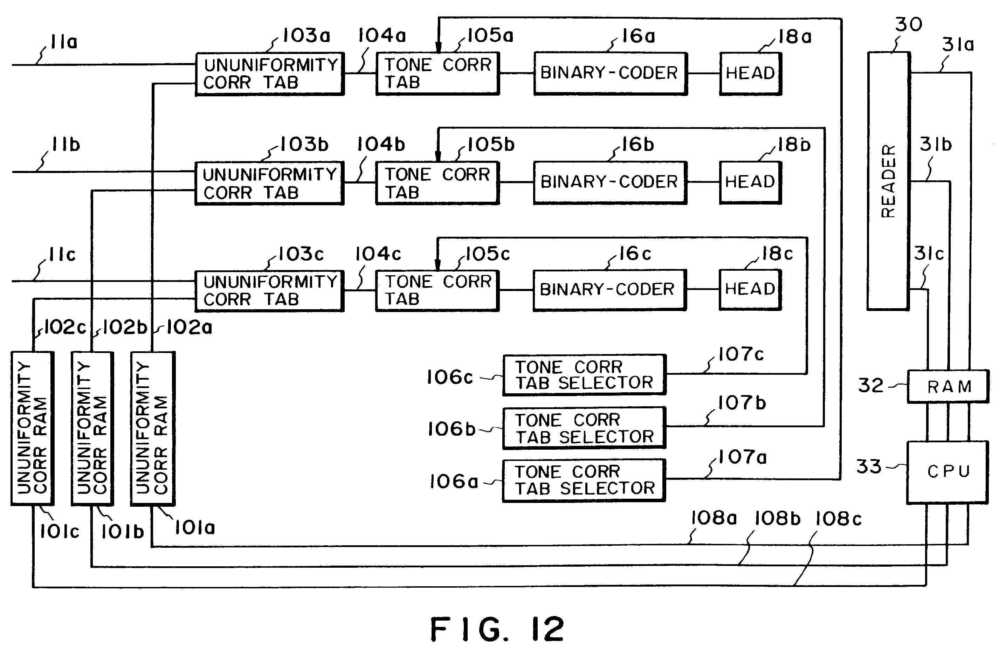

When the relation between the image signal and the output density, that is, tone characteristics, are as shown in Figure 10, the image signal is corrected by the amount $\Delta S$ in order to correct the density by $\Delta ODn$. In order to do this, the image signal is table-converted on the basis of the characteristics shown in Figure 11.

The line A of Figure 11 has the inclination of 1.0, and therefore, the input is outputted as it is without any conversion. On the other hand, the line B has a smaller inclination than the line A, and therefore, when the input signal S is supplied, the output signal is S - $\Delta S$. Therefore, to the image signal supplied to the n-th nozzle, the table-conversion is effected using the line B of Figure 11, and then, is supplied to the recording head to drive it, by which the density of the print provided by the nozzle is equal to OD.

By effecting such processing to all the nozzles, the density non-uniformity is corrected so that a uniform image can be provided. In another words, the density non-uniformity can be corrected if the data of table conversion for the nozzles are predetermined.

However, due to the differences among tone characteristics of the individual recording heads, the correction is not sufficient by a single operation of reading the density non-uniformity and producing the correcting data.

When the tone characteristics of the recording head are as shown by line C, and if a density difference $\Delta OD$ exists in the case of the image signal S, the density difference $\Delta OD$ can be removed by correcting the image signal by the predetermined amount $\Delta S$ However, when the tone characteristics of the recording head are as shown by the curve D, and when the correction of the predetermined amount ΔS is imposed on the basis of the detection of the difference ΔOD, the actually effected amount of correction is only ΔOD′, and therefore, the uniform image can be provided only by a single correcting operation.

The fourth embodiment is aimed at the correction of the density non-uniformity in a short period.

Referring to Figure 12; there is shown the fourth embodiment. The apparatus comprises non-uniformity correcting RAMs 101a, 101b and 101c and store selection signals for the correcting lines required for correcting the density non-uniformity of the recording head. That is, they store correcting signals having 61 levels (0 - 60) for 256 nozzles. In synchronism with the input signals, non-uniformity correcting signals 102a, 102b and 102c are produced.

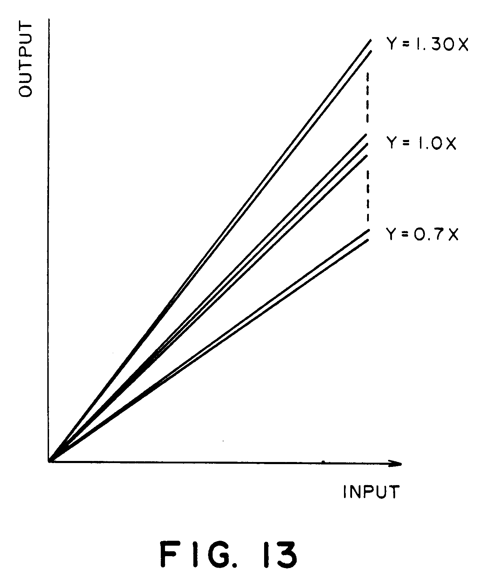

Non-uniformity correcting tables 103a, 103b and 103c (density non-uniformity correcting means) effect conversion of the image signals 11a, 11b and 11c to correct the non-uniformity of the recording heads 18a, 18b and 18c. As shown in Figure 13, there are 61 correcting lines from Y = 0.70X to Y = 1.30X with the increment of 0.01 inclination. In accordance with the non-uniformity correcting signals 102a, 102b and 102c, the correcting curves are switched. For example, when a picture element signal is supplied to the nozzle providing a large dot diameter, the smaller inclination correcting curve is selected, and when it is supplied to the nozzle providing a smaller diameter dot, the larger inclination correcting line is selected, so as to properly correct the image signal.

The tone correcting tables 105a, 105b and 105c (tone correcting means) has a ROM storing 20 tone correcting curves having different profiles. The optimum tone correcting table for each of the recording heads is determined on the basis of test after manufacturing the recording head, and is marked or labeled on the corresponding head.

Tone correcting table selectors 106a, 106b and 106c (input means) function to select by software from the operation panel the optimum tone correcting curve for each of the heads or to select by switches on the electric board.

Binary coding circuits 16a, 16b and 16c functions to convert the signals corrected by the tone correcting table 105 to two level signals by the dithering or error dispersion method. Designated by reference numerals 18a, 18b and 18c are ink jet heads having 256 nozzles for each color.

A reader 30 (reading means), has a CCD element with a red (R), green (G) and blue (B) filters, and the CCD element have the same density 400 dpi which is the same as the recording density of the head. The number of picture elements of the CCD is larger than the number of nozzles of the recording head, that is, larger than 256. A RAM 32 stores the read signals 31a, 31b and 31c from the reader 30. The CPU 33 processes the corrected data in accordance with the R, G and B signals from the RAM 32.

Designated by references 11a, 11b and 11c are image signals of three colors, i.e., cyan, magenta and yellow color; 104a, 104b and 104c are image signals after non-uniformity correction for the respective colors; 31a, 31b and 31c are read signals from the reader 30 for the respective colors R, G and B; 108a, 108b and 108c are non-uniformity correcting data for the cyan, magenta and yellow colors; and 102a, 102b and 102c are non-uniformity correcting signals for the respective colors.

In operation, the image signals 11a, 11b and 11c are converted by the non-uniformity correcting table 103a, 103b and 103c in the direction of reducing the non-uniformity peculiar to the recording heads 18a, 18b and 18c. In synchronism with the input image signals, non-uniformity correcting signals 102a, 102b and 102c are produced. The non-uniformity corrected signals 104a, 104b and 104c from which the non-uniformity is removed by γ lines selected by the non-uniformity correcting signals 102a, 102b and 102c are supplied to the tone correcting tables 105a, 105b and 105c, and the tone characteristics of the recording heads 18a, 18b and 18c are corrected by the tone correcting tables 105a, 105b and 105c, and the corrected signals are outputted.

In this embodiment, the optimum tone correcting table for each of the recording heads is determined on the basis of the characteristics test after the manufacturing of the recording head, and the results are marked or labeled on the corresponding head. When the recording head is mounted, the operator looks at the label or marking, and selects the tone correcting selection signal by the correcting table selectors 106a, 106b and 106c as an address of the tone correcting table, thus selecting the proper table.

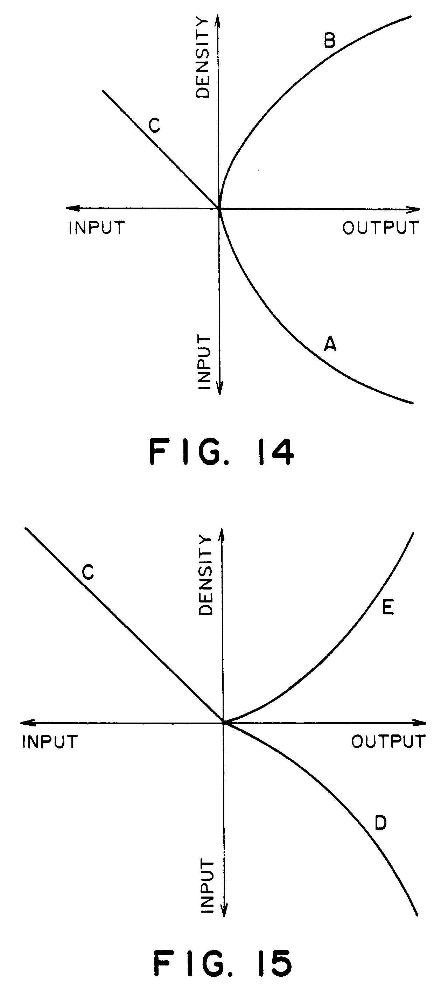

When the tone characteristics of the recording head is as shown by a curve B of Figure 14, the tone correcting table of curve A is selected so that the relation between the input signal and the image density is as indicated by the line C. When the tone characteristics of the recording head is as shown by a curve E of Figure 15, a table of curve D is selected so that the linear tone as indicated by the line C is obtained. In this manner, the optimum tone correcting table for the recording head is selected, by which the relation between the input signal and the image density is on the same line at all times.

The signal corrected in this manner is binary-coded by a binary coding circuits 16a, 16b and 16c using the dithering or error dispersion method or the like. On the basis of the signals from the circuit 16a, 16b and 16c, the multi-nozzle ink jet recording heads 18a, 18b and 18c are driven. As a result, the number of dots from the nozzle providing a larger dot size is small, and the number of dots from the nozzle providing a smaller size is larger, so that uniform image can be provided.

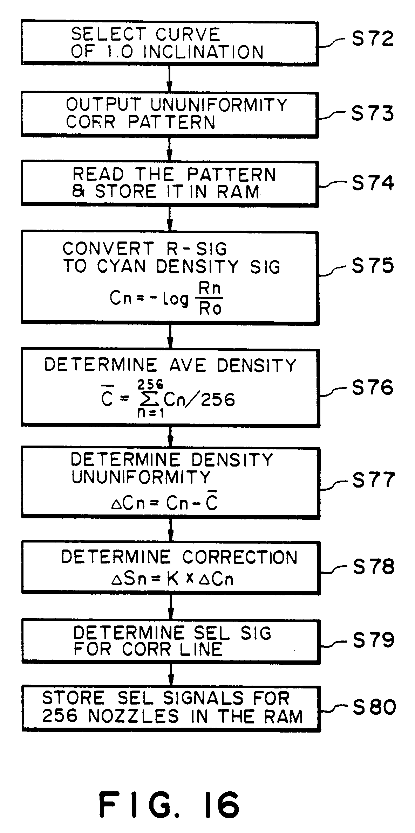

Figure 16 shows a flow chart illustrating the density non-uniformity correcting steps performed by the CPU 33 shown in Figure 12.

At step S72, in response to an unshown control signal, a line having an inclination of 1.0 is selected for all of the correcting tables 103a, 103b and 103c, so that the non-correction function is established. Subsequently, at step S73, a correction pattern is outputted from an unshown signal source, so that a non-uniformity correcting pattern is printed by the recording heads 18a, 18b and 18c. The correcting pattern may be a uniform pattern having any printing duty. However, the printing duty is preferably 30 - 75 %. In this embodiment, the correcting pattern is a uniform halftone pattern of 50 % printing duty in each of cyan, magenta and yellow colors.

At step S74, the pattern produced by the step S73 is read by the reader 30, and the read signals 31a, 31b and 31c for the three colors are stored in the RAM 32. From the read red signal, the non-uniformity distribution of the cyan head is obtained; from the green signal, the non-uniformity distribution of the magenta head is obtained; and from the blue signal, the non-uniformity distribution of the yellow head is obtained. Here, the description will be made as to the non-uniformity correction is effected on the basis of the distribution of the non-uniformity of the cyan head, for simplicity.

At step S75, for a red signal Rn (n = 1 - 256) obtained corresponding to the respective nozzles of the cyan recording head, the calculation is effected using the following equation:

$$Cn = -\log(Rn/Ro)$$

Ro is a constant not less than Rn. B doing so, it is converted to a cyan density signal, so that the density non-uniformity distribution can be obtained. At step S76, the average density $\overline{C}$ is obtained by the following equation:

$$\overline{C} = \sum_{n=1}^{256} (Cn/256) \qquad (1)$$

At step S77, the deviation of the image density from the average density obtained in the foregoing step is obtained by the following equation:

$$\Delta Cn = Cn - \overline{C} \quad (2)$$

At step S78, the amount of correction corresponding to $\Delta Cn$ is obtained by $\Delta Sn = K \times \Delta Cn$, where K is a constant determined by the tone characteristics of the recording head, but in this embodiment, the optimum coefficient when the tone characteristics correspond to a line is selected.

At step S79, a selection signal for the correcting line to be selected for the $\Delta Sn$ is determined. At step S80, the non-uniformity correcting signals having 0 - 60 levels are stored in the non-uniformity correcting RAM 101a for 256 nozzles.

Using the correcting data thus provided, the γ lines different for the individual nozzles are selected to correct the density non-uniformity. The variation of the tone characteristics of the recording heads are corrected by selecting optimum tone correcting table, and therefore, the optimum correction levels can be obtained, and the density non-uniformity can be corrected in a short period.

In this embodiment, the description has been made with respect to an example of the cyan head, but the density non-uniformity correction can be carried out in a short period through the similar steps for the magenta and yellow recording heads, and therefore, the inoperable period of the machine can be minimized.

The reading operation for the printed correcting pattern may be carried out by the user or the service man by setting the output record on the reader.

In an alternative, a printed test pattern may be automatically read by the apparatus.

Embodiment 5

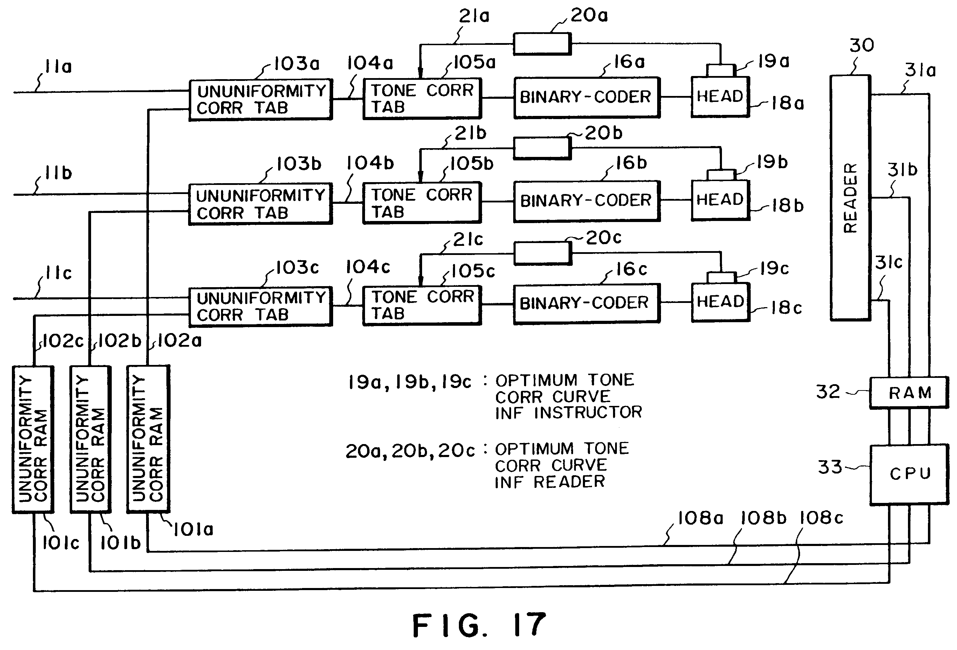

Figure 17 shows a fifth embodiment. As compared with the fourth embodiment, the input means for the tone correcting information is different. The input means is similar to that of the first embodiment (Figure 1).

In Figure 4 embodiment, each of the recording heads is labeled or marked with an optimum tone correcting table. When the recording head is mounted, the operator looks at it, and inputs the tone correction selecting signal to the addresses of the tone correcting table 105 by the tone correcting table selectors 106a, 106b and 106c so as to select the proper table. In this embodiment, the indexes 19a, 19b and 19c of the information indicative of the optimum tone characteristic correcting curve is in the form of data in the ROM or in the form of a resistance of a variable resistor having a level corresponding to the optimum tone correcting curve of each of the recording heads. The readers 20a, 20b and 20c reads the information indicative of the optimum curves, and in accordance with the information of the optimum curve thus read, the control signals 21a, 21b and 21c are transmitted to the tone correcting tables 105a, 105b and 105c, so that the optimum tone correcting curves may be automatically set.

Therefore, the advantageous effects of this embodiment is essentially the same as the embodiment of Figure 4. However, there is an advantage that the operation for setting the optimum tone correcting curve is selected for the respective mountings of the recording heads can be omitted. In this embodiment, the index is in the form of the ROM or the variable resistor, but it may be in the form of a switch having plural stages.

It is a possible alternative that the configuration of a part of the recording head may be changed in accordance with the optimum curve, and a control signal is produced in accordance with the configuration when the recording head is engaged into the recording apparatus.

The index is not necessarily integral with the recording head. For example, a ROM storing the information is prepared separate from the recording head, and the ROM may be simultaneously mounted into the apparatus when the recording head is mounted.

In addition, it is not necessary to effect the density non-uniformity correction for each one of the picture elements, but may be effected for respective blocks, each block being defined as including adjacent plural picture elements.

Embodiment 6

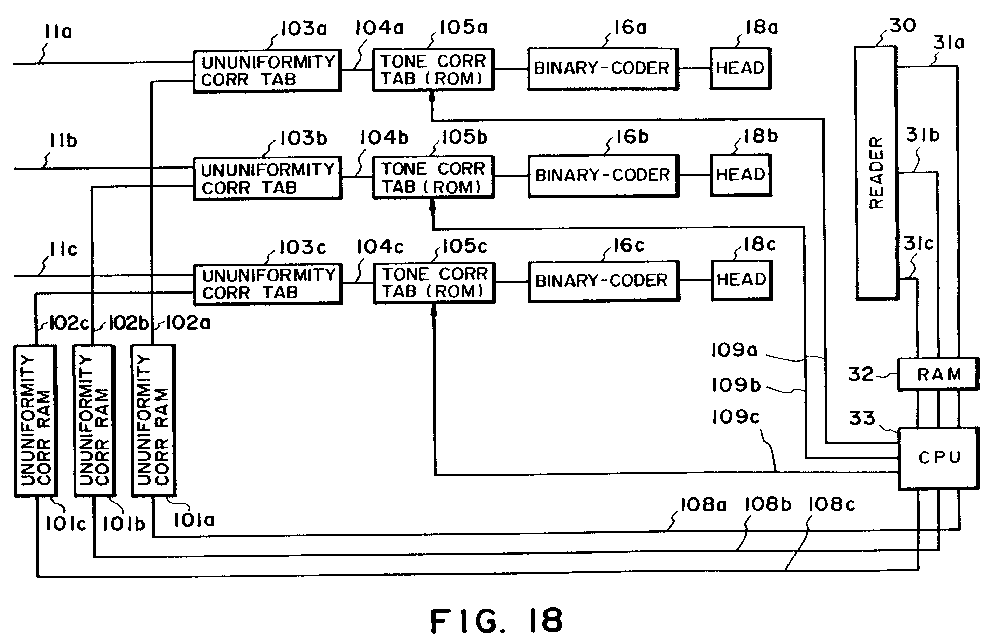

Figure 18 shows sixth embodiment.

As compared with the fourth embodiment, the input means for the tone correcting information is different, and the input means in this embodiment is the same as in the second embodiment shown in Figure 3.

In this embodiment, the tone characteristics of the recording head is detected in the apparatus, and in accordance with the result, the optimum curve is discriminated by the CPU 33. The optimum correcting curve selecting signals 109a, 109b and 109c are supplied to the tone correcting table in accordance with the discrimination, and the optimum tone correcting table is selected. The tone correcting operation by the CPU 33 in this embodiment is similar to that shown in the flow chart of Figure 4, and therefore, the description is omitted for simplicity.

After the tone correcting operation, the density non-uniformity correcting data are produced as in the fourth embodiment.

By doing so, the non-uniformity correcting data can be produced in a short period even if the tone characteristics are changed with time of use of the recording head, and therefore, the inoperative period of the apparatus can be minimized.

Embodiment 7

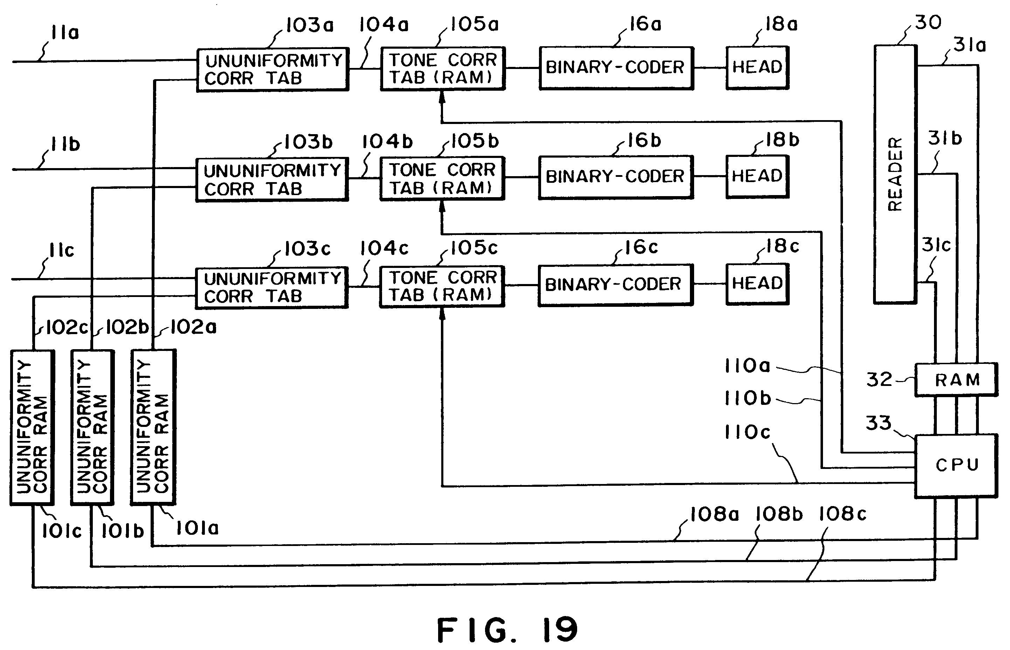

Figure 19 shows a seventh embodiment.

As compared with the sixth embodiment, the input means for inputting the tone correcting information is different, and the input means of this embodiment is similar to the third embodiment shown in Figure 6.

In the sixth embodiment, the tone characteristics of the recording head are measured in the apparatus, and in accordance with the result, the optimum curve is discriminated by the CPU 33. The optimum tone correcting curve selecting signals 109a, 109b and 109c are supplied to the tone correcting tables 105a, 105b and 105c at the ROM thereof in accordance with the result of the discrimination so as to permit the selection of the optimum tone correcting table. In this embodiment, the tone characteristics of the recording head is detected in the apparatus, and from the detected densities for the respective tone levels, a proper tone correcting curve is obtained, and the correcting curve data 110a, 110b and 110c obtained by the processing as the proper ones, are stored in the RAM of the tone correcting tables 105a, 105b and 105c. The tone correcting operation by the CPU 33 in this embodiment is similar to that shown in the flow chart of Figure 7 and therefore, the description thereof is omitted for the simplicity.

After the tone correcting operation, the density non-uniformity correcting data are produced through the similar steps as in the fourth embodiment.

By doing so, the non-uniformity correcting data can be produced in a short period of time for the recording head having any tone characteristics, and therefore, the inoperative period of the machine can be minimized.

In the fourth - seventh embodiments, the description has been as to the ink jet recording head, however, they are applicable to a thermal head for a thermal transfer type printer.

The multi-nozzle head is not limited to the semi-multi-nozzle head and may be a full-multi-nozzle head having the same width as the width of the image.

As for the method of non-uniformity correction, the number of dots is changed, but the width or the voltage of the driving pulse may be changed to change the area of the dot itself.

In the foregoing, the description has been made as to an image recording apparatus for producing a color image using cyan, magenta and yellow colors, but the present invention is applicable to a monochromatic image recording apparatus.

Embodiment 8

The embodiment is intended to further improve the tone correcting function of the apparatus of the fourth embodiment.

The fourth embodiment enables the density uniformity to be efficiently corrected, particularly noting the difference in the tone characteristics of the individual recording heads.

In the actual recording heads, one certain recording head does not necessarily have the nozzles with completely uniform tone characteristics, in other words, the tone characteristics of the nozzles are different even in one head. From this fact, a problem arises which will be described.

For the simplicity of explanation, two nozzles having different image densities will be taken.

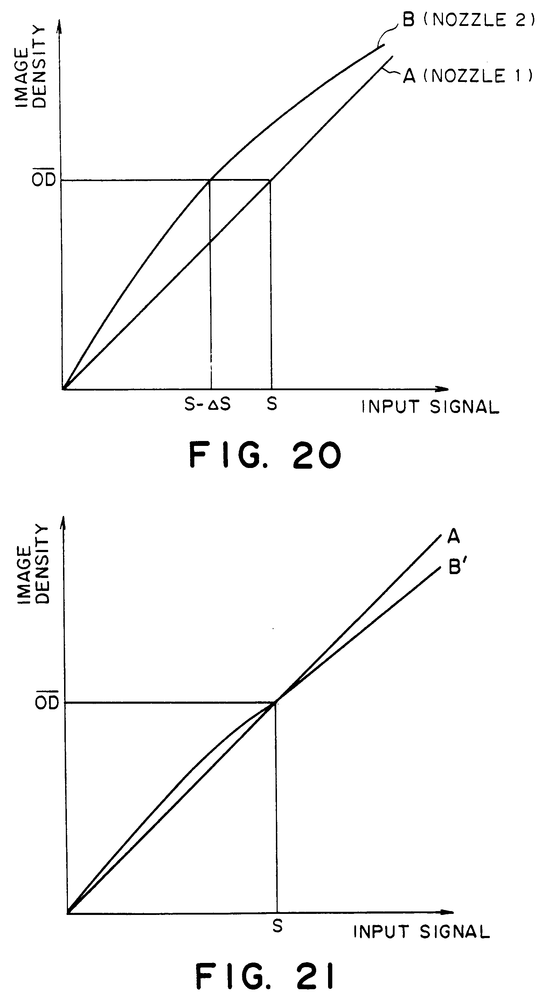

In Figure 20, A represents the tone characteristics of a nozzle 1, and B represents the tone characteristics of a nozzle 2. As will be understood, the nozzle 2 ejects a larger amount of ink than the nozzle 1, and therefore, the tone characteristics shown are provided. When the density difference is corrected for the signal S, the image signal for the nozzle 2 is multiplied by

$(S-\Delta S)/S$ .

Then, the tone characteristics B is as if it is expanded in the x direction by multiplying with $S/(S-\Delta S)$ . This is shown by B' in Figure 21. By doing so, the density deviation upon the input signal S can be corrected, but the density deviation remains in the other area. In order to correct the density deviation in all areas, the tone characteristics of the nozzles are all on the same curve or line.

Actually, however, the amounts of ink ejection of the respective nozzles are different. As a result, the tone characteristics of the-nozzles are different.

Therefore, even if the density deviation can be corrected at a certain printing duty, the non-uniformity still remains with the other printing duty, and therefore, it is difficult to substantially completely correct the non-uniformity over the entire tone levels.

The problem is not limited to the ink jet printer, but also arises in the thermal transfer type printer because the dot diameter provided by the respective heaters are not uniform, and the tone characteristics are not uniform.

The eighth embodiment is intended to provide a solution to the problem.

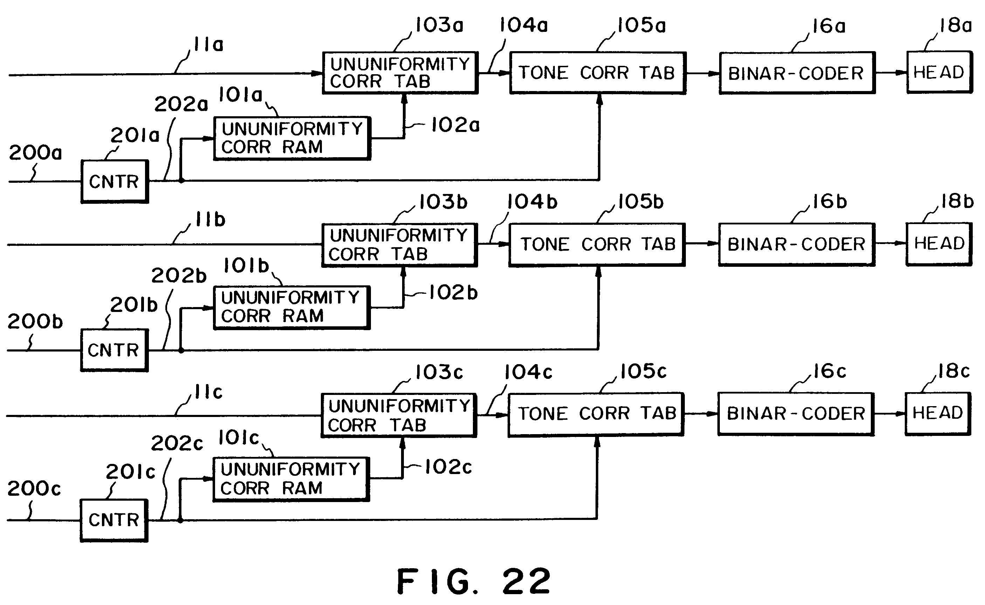

Figure 22 is a block diagram of a circuit used in the apparatus of the eighth embodiment. References 11a, 11b and 11c designate image signals for the cyan, magenta and yellow colors, respectively. References 104a, 104b and 104c are image signals having been subjected to the non-uniformity correcting operation for the respective colors. The apparatus comprises tone correcting tables 105a, 105b and 105c for the respective colors, binary coding circuits 16a, 16b and 16c, and ink jet recording heads 18a, 18b and 18c for the respective colors, each having 256 nozzles. References 200a, 200b and 200c designate clock signals supplied in synchronism with the image signals for the respective colors. References 202a, 202b and 202c are output signals of counters 201a, 201b and 201c, respectively.

The image signals 11a, 11b and 11c are serial image signals for the respective colors. The clock signals 200a, 200b and 200c are in synchronism with the image signals and are supplied to the counters 201a, 201b and 201c. The counter counts the clock signals to produce 8-bit signals having levels of 0 - 255. Since the number of nozzles of the recording head is 256, the output of the counter is indicative of the number of the nozzle to which the image signal currently processed is to be supplied.

The image signal 11a, 11b and 11c are converted by the non-uniformity correcting table 103a, 103b and 103c so that the non-uniformity of the heads 10a, 18b and 18c are corrected. The non-uniformity correcting tables 103a, 103b and 103c each contain 61 correcting lines from Y = 0.70X to Y = 1.30X with the increment of inclination of 0.01, as shown in Figure 13, In accordance with the non-uniformity correcting signals 102a, 102b and 102c, the correcting line is switched.

For example, when the picture element signal is to be supplied to the nozzle having the tendency of large dot size, the correcting line having smaller inclination is selected, and when it is supplied to the smaller dot nozzle, the correcting line of large inclination is selected. The image signal is corrected in this manner.

The non-uniformity correcting RAMs 101a, 101b and 101c store selection signals for the correcting lines required for correcting the non-uniformity peculiar to each of the heads. More particularly, it stores the correcting signals having 0 - 60 levels for 256 nozzles. In accordance with the output signal from the counter, the non-uniformity correcting signals 102a - 102c are produced. By the $\gamma$ line selected by the non-uniformity correcting signals, the signal is corrected to the signals 104a, 104b and 104c, which are supplied to the tone characteristics correcting table 105a, 105b and 105c, and the tone characteristics of the recording head are corrected and outputted.

The tone correcting table comprises a ROM storing tone correcting curves for correcting the tone characteristics of the nozzles of the recording head so as to have a rectilinear property for 256 nozzles. Into the upper bits of the input address of the ROM, the counter output is supplied, and the correcting curves prepared for the nozzles are selected. Then, the non-uniformity correcting signals 104a, 104b and 104c are inputted to the lower bits thereof, and the tone is corrected for the individual nozzles.

The tone correcting table has been prepared beforehand on the basis of the characteristic tests for the respective heads. The tone characteristics of the individual nozzles can be determined by reading tone characteristics detecting pattern by a CCD element having the same reading density as the recording density of the head. On the basis of the detection, the correcting curves for the respective nozzles can be produced.

As shown in Figure 14, for example, if the tone characteristics of the nozzle is as shown by B, the tone correcting curve as indicated by A is used so as to effect the tone characteristics correction so as to provide the line indicated by C (indicating the relation between the input signal and the image density). When the tone characteristics of the nozzle is as indicated by E of Figure 15, the curve D is used so that the linear tone property as indicated by the line C can be provided. Thus, by selecting the optimum tone correcting curve for each of the nozzles, by which the relation between the input signal and the image density is on the same line for all the nozzles.

The signals thus corrected are converted to two level signals by the binary coding circuits 16a, 16b and 16c using the dithering method, the error dispersion method or the like, and drive the multi-nozzle ink jet recording heads 18a, 18b and 18c. As a result, the number of dots ejected from the nozzle having the tendency of large dot size is small, whereas the number of dots from the nozzle having the tendency of smaller dot size is large, and therefore, uniform image can be produced. At this time, since the correction is made so as to provide a linear property of the tone characteristics of each of the nozzles, the non-uniformity correcting effects can be provided for any printing duties.

Embodiment 9

A ninth embodiment will be described.

In the seven embodiment, the image signal is converted to a two level signal to effect to level recording, and therefore, the correction of the density non-uniformity is effected by changing the number of dots, but in the eighth embodiment, the size of the dot is changed.

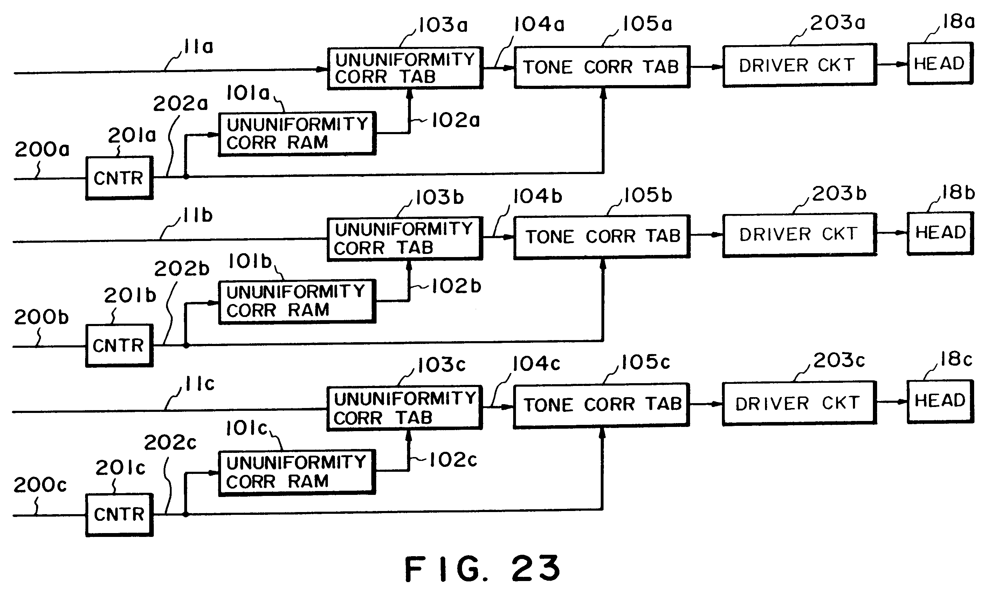

Figure 23 is a block diagram of a circuit used in the apparatus of the ninth embodiment. The same reference numerals as in Figure 22 are assigned to the elements having the corresponding functions, and the description thereof are omitted for simplicity.

In Figure 23, the apparatus comprises driving circuits 203a, 203b and 203c for producing head recording pulses having voltages proportional to the level of the image signals. The heads 18a, 18b and 18c a piezoelectric type ink jet recording heads in which the amounts of ink ejection are changed in accordance with the levels of the driving voltage, so that the dot size is changed thereby.

With this structure, when the operation similar to the seventh embodiment is carried out, the present invention is applicable in the image recording apparatus wherein the non-uniformity is corrected by correcting the dot diameter.

Embodiment 10

A tenth embodiment will be described. The block diagram of the tenth embodiment is the same as that of Figure 22, but the driving circuit has the function of producing a head driving signal with a pulse width proportional to the level of the image signal. The recording head is of a type in which the dot sise is changeable by changing the pulse width of the driving signal.

By constructing in this way, the same advantageous effects as in the ninth embodiment can be provided.

In this embodiment, an ink jet recording head is taken, but the present invention is not limited to this and is applicable to the entire multi-elements recording head such as a thermal head for the thermal transfer type printer.

In one certain recording head, all of the recording elements do not provide the same density characteristics and tone characteristics. However, there is a tendency that the characteristics of adjacent recording elements are relatively the same. Therefore, the density non-uniformity correcting and the tone correction are not necessarily required to be made to the individual image recording elements. On the contrary, they are classified into plural blocks containing plural recording elements, and the control is effected to the blocks.

In the foregoing embodiment, the description has been made as to the image recording apparatus for providing a color image using cyan, magenta and yellow colors, but the present invention is applicable to a monochromatic color image recording apparatus.

In the eighth, ninth and tenth embodiment, if the density non-uniformity of the recording head is not very conspicuous, only the tone correction may be effected for the individual image recording elements without density non-uniformity correction.

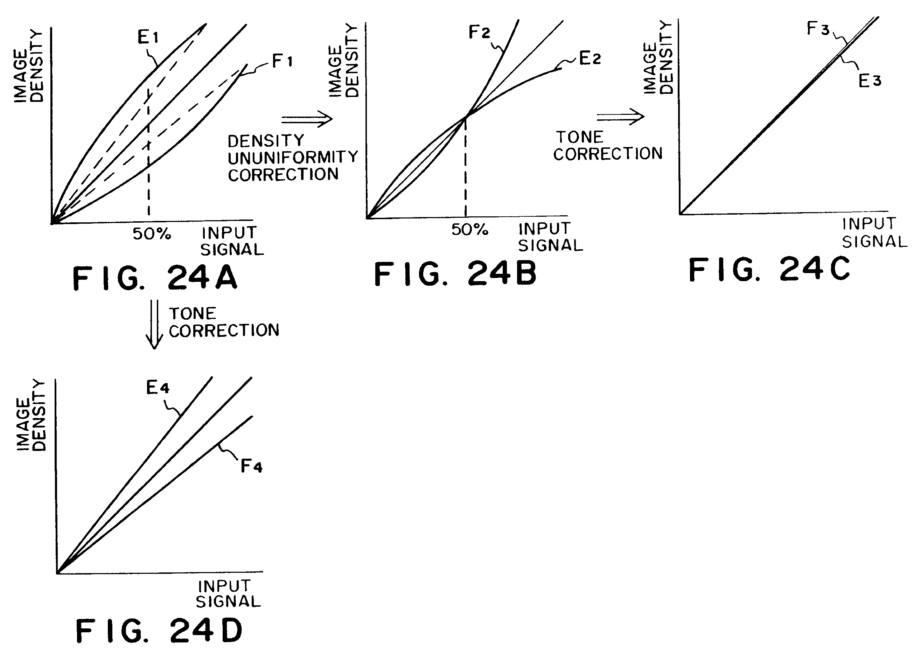

Referring to Figure 24, the description will be made as to the tone correction and the density non-uniformity correction. When the density non-uniformity correction is made to the nozsles having two tone characteristics E1 and F1, then the tone characteristics E2 and F2 as shown in Figure 24B result. If the tone correction is added, the tone characteristics E3 and F3 shown in Figure 24c are provided. On the other hand, if the density non-uniformity correction is not made to the tone characteristics E1 and F1, and only the tone correction is effected thereto, the tone characteristics E4 and F4 as shown in Figure D result.

As will be understood from the foregoing, the density non-uniformity correction is effected in order to remove or reduce the density differences among the recording elements by the correction so as to provide the same image density by the image recording elements in response to a predetermined input signal (50 % printing duty in the Figure). The tone correction is the correction so as to provide the predetermined tone characteristics (rectilinear line in the Figure).

The present invention is particularly suitably usable in a bubble jet recording head and recording apparatus developed by Canon Kabushiki Kaisha, Japan. This is because, the high density of the picture element, and the high resolution of the recording are possible.

The typical structure and the operational principle of preferably the one disclosed in U.S. Patent Nos. 4,723,129 and 4,740,796. The principle is applicable to a so-called on-demand type recording system and a continuous type recording system particularly however, it is suitable for the on-demand type because the principle is such that at least one driving signal is applied to an electrothermal transducer disposed on a liquid (ink) retaining sheet or liquid passage, the driving signal being enough to provide such a quick temperature rise beyond a departure from nucleation boiling point, by which the thermal energy is provide by the electrothermal transducer to produce film boiling on the heating portion of the recording head, whereby a bubble can be formed in the liquid (ink) corresponding to each of the driving signals. By the development and collapse of the the bubble, the liquid (ink) is ejected through an ejection outlet to produce at least one droplet. The driving signal is preferably in the form of a pulse, because the development and collapse of the bubble can be effected instantaneously, and therefore, the liquid (ink) is ejected with quick response. The driving signal in the form of the pulse is preferably such as disclosed in U.S. Patents Nos. 4,463,359 and 4,345,262. In addition, the temperature increasing rate of the heating surface is preferably such as disclosed in U.S. Patent No. 4,313,124.

The structure of the recording head may be as shown in U.S. Patent Nos. 4,558,333 and 4,459,600 wherein the heating portion is disposed at a bent portion in addition to the structure of the combination of the ejection outlet, liquid passage and the electrothermal transducer as disclosed in the above-mentioned patents. In addition, the present invention is applicable to the structure disclosed in Japanese Laid-Open Patent Application Publication No. 123670/1984 wherein a common slit is used as the ejection outlet for plural electrothermal transducers, and to the structure disclosed in Japanese Laid-Open Patent Application No. 138461/1984 wherein an opening for absorbing pressure wave of the thermal energy is formed corresponding to the ejecting portion. This is because, the present invention is effective to perform the recording operation with certainty and at high efficiency irrespective of the type of the recording head.

The present invention is effectively applicable to a so-called full-line type recording head having a length corresponding to the maximum recording width. Such a recording head may comprise a single recording head and a plural recording head combined to cover the entire width.

In addition, the present invention is applicable to a serial type recording head wherein the recording head is fixed on the main assembly, to a replaceable chip type recording head which is connected electrically with the main apparatus and can be supplied with the ink by being mounted in the main assembly, or to a cartridge type recording head having an integral ink container.

The provision of the recovery means and the auxiliary means for the preliminary operation are preferable, because they can further stabilize the effect of the present invention. As for such means, there are capping means for the recording head, cleaning means therefor, pressing or sucking means, preliminary heating means by the ejection electrothermal transducer or by a combination of the ejection electrothermal transducer and additional heating element and means for preliminary ejection not for the recording operation, which can stabilize the recording operation.

As regards the kinds of the recording head mountable, it may be a single corresponding to a single color ink, or may be plural corresponding to the plurality of ink materials having different recording color or density. The present invention is effectively applicable to an apparatus having at least one of a monochromatic mode mainly with black and a multi-color with different color ink materials and a full-color mode by the mixture of the colors which may be an integrally formed recording unit or a combination of plural recording heads.

Furthermore, in the foregoing embodiment, the ink has been liquid. It may be, however, an ink material solidified at the room temperature or below and liquefied at the room temperature. Since in the ink jet recording system, the ink is controlled within the temperature not less than 30 $^\circ$C and not more than 70 $^\circ$C to stabilize the viscosity of the ink to provide the stabilized ejection, in usual recording apparatus of this type, the ink is such that it is liquid within the temperature range when the recording signal is applied. In addition, the temperature rise due to the thermal energy is positively prevented by consuming it for the state change of the ink from the solid state to the liquid state, or the ink material is solidified when it is left is used to prevent the evaporation of the ink. In either of the cases, the application of the recording signal producing thermal energy, the ink may be liquefied, and the liquefied ink may be ejected. The ink may start to be solidified at the time when it reaches the recording material. The present invention is applicable to such an ink material as is liquefied by the application of the thermal energy. Such an ink material may be retained as a liquid or solid material on through holes or recesses formed in a porous sheet as disclosed in Japanese Laid-Open Patent Application No. 56847/1979 and Japanese Laid-Open Patent Application No. 71260/1985. The sheet is faced to the electrothermal transducers. The most effective one for the ink materials described above is the film boiling system.

The ink jet recording apparatus may be used as an output terminal of an information processing apparatus such as computer or the like, a copying apparatus combined with an image reader or the like, or a facsimile machine having information sending and receiving functions.

As described in the foregoing, according to the present invention, the tone correcting curve is selectable in accordance with the tone characteristics of the recording heads, and therefore, high quality recorded images can be provided with good tone reproducibility and with good color balance even if the recording head is changed or even if the recording head property is changed with use or with time.

According to the present invention, the density non-uniformity correcting data can be produced for a short period of time, and therefore, the inoperative period of the machine can be minimized.

In addition, according to the present invention, the image signal is corrected to compensate for the density non-uniformity of the recording head, and furthermore, the tone characteristics correction is made to the individual recording elements of the multi-elements recording heads, and therefore, the images without density non-uniformity can be provided with any printing duties.

While the invention has been described with reference to the structures disclosed herein, it is not confined to the details set forth and this application is intended to cover such modifications or changes as may come within the purposes of the improvements or the scope of the following claims.

An image recording apparatus using a recording head includes a tone correcting device for correcting tone levels of an image signal to be supplied to the recording head to correct tone characteristics of the recording head in accordance with tone correcting information provided for the recording head; and a tone correcting information setting device for setting the tone correcting information to the tone correcting device for the recording head.

**Claims**

1. An image recording apparatus, comprising

   a recording head unit comprising a plurality of groups (18a, 18b, 18c) each having a plurality of image recording elements, having particular tone characteristics, in response to an image signal supplied to said recording head unit, **characterized in** that tone correcting means (14) are provided for correcting the image signal to be supplied to said image recording elements in accordance with tone correcting information (21a, 21b, 21c) so as to provide predetermined tone characteristics, and that in order to achieve predetermined tone characteristics individual tone correcting information is supplied to each of said groups (18a, 18b, 18c) such that the image signal matches with the tone characteristics associated with said recording head unit.

2. An apparatus according to Claim 1, further comprising:

   tone correcting information setting means for setting the tone correcting information.

3. An apparatus according to Claim 2, wherein said tone correcting information setting means includes signal generating means for generating a tone-characteristic signal corresponding to the particular tone characteristics associated with said recording head unit and sets the tone correcting information in accordance with the tone-characteristic signal generated by said signal generating means.

4. An apparatus according to Claim 3, wherein said signal generating means comprises a ROM mounted on each recording head.

5. An apparatus according to Claim 3, wherein said signal generating means comprises pattern outputting means for outputting a tone-characteristic detecting pattern to be recorded by each of said group, image reading means for reading the pattern and process means for comparing an output of said reading means with predetermined tone-correcting characteristics to determine the tone characteristics associated with said group of recording head unit.

6. An apparatus according to Claim 2, wherein said tone correcting information setting means comprises pattern outputting means for outputting a tone-characteristic detecting pattern to be recorded by each of said groups, image reading means for reading the pattern, process means for determining a desired tone-correcting curve for that group on the basis of data from said image reading means and signal outputting means for outputting the desired tone-correcting curve as the tone correcting information.

7. An apparatus according to Claim 1, wherein said recording head has particular tone and density characteristics, further comprising density non-uniformity correcting means for correcting the image signal to be supplied to said recording head to substantially compensate for non-uniform density characteristics of the image recorded by said plural recording elements; so as to reduce density differences among said recording elements.

8. An apparatus according to Claim 1, wherein there are provided a plurality of such recording heads and plurality of such tone correcting means, and said groups contain said recording head, respectively.

9. An apparatus according to Claim 8, wherein said recording head has particular tone and density characteristics, further comprising density non-uniformity correcting means for correcting the image signal to be supplied to said recording head to substantially compensate for non-uniform density characteristics of the image recorded by said plural recording elements; so as to reduce density differences among said recording elements.

10. An apparatus according to Claim 8 or 9, wherein the plurality of recording heads comprises plural recording head elements to effect recording in different colors to form a color image.

11. An apparatus according to Claim 1, wherein said recording head records dots and changes the tone of the image by changing a number of dots in accordance with the corrected image signal supplied thereto.

**12.** An apparatus according to Claim 1, wherein said recording head records dots and changes the tone of the image by changing dot size in accordance with the corrected image signal supplied thereto.

**13.** An apparatus according to any one of Claims 1 to 12, wherein said recording head comprises an ink jet recording head for ejecting ink through ejection outlets.

**14.** An apparatus according to Claim 13, wherein each recording head includes thermal energy producing means disposed adjacent the ejection outlets to change the state of the ink and eject the ink through the ejection outlets.

**15.** An apparatus according to any one of Claims 1 to 14, wherein said apparatus is a facsimile machine.

**16.** An apparatus according to any one of Claims 1 to 14, wherein said apparatus is a copying machine.

**Patentansprüche**

**1.** Bildaufzeichnungseinrichtung, mit:

einer Aufzeichnungskopfeinheit mit einer Vielzahl von Gruppen (18a, 18b, 18c), die jeweils eine Vielzahl von Bildaufzeichnungselementen, die ansprechend auf ein zu der Aufzeichnungskopfeinheit geführtes Bildsignal besondere Tönungskenngrößen haben, besitzen,
**dadurch gekennzeichnet, daß**
eine Tönungskorrektureinrichtung (14) zum Korrigieren des zu den Bildaufzeichnungselementen zu führenden Bildsignals in Übereinstimmung mit Tönungskorrekturinformation (21a, 21b, 21c) gebildet ist, um vorbestimmte Tönungskenngrößen zu erzeugen, und daß zum Erreichen von vorbestimmten Tönungskenngrößen eine einzelne Tönungskorrekturinformation zu jeder der Gruppen (18a, 18b, 18c) geführt wird, derart, daß das Bildsignal den der Aufzeichnungskopfeinheit zugehörigen Tönungskenngrößen angepaßt ist.

**2.** Einrichtung nach Anspruch 1,
**gekennzeichnet durch**

eine Tönungskorrekturinformations-Einstelleinrichtung zum Einstellen der Tönungskorrekturinformation.

**3.** Einrichtung nach Anspruch 2,
**dadurch gekennzeichnet, daß**

die Tönungskorrekturinformations-Einstelleinrichtung eine Signalerzeugungseinrichtung zum Erzeugen eines Tönungskenngrößensignals entsprechend den der Aufzeichnungskopfeinheit zugehörigen besonderen Tönungskenngrößen umfaßt und die Tönungskorrekturinformation in Übereinstimmung mit dem durch die Signalerzeugungseinrichtung erzeugten Tönungskenngrößensignal einstellt.

**4.** Einrichtung nach Anspruch 3,
**dadurch gekennzeichnet, daß**

die Signalerzeugungseinrichtung einen auf jedem Aufzeichnungskopf montierten Nur-Lesespeicher (ROM) umfaßt.

**5.** Einrichtung nach Anspruch 3,
**dadurch gekennzeichnet, daß**

die Signalerzeugungseinrichtung eine Musterausgabeeinrichtung zum Ausgeben eines durch jede der Gruppen aufzuzeichnenden Tönungskenngrößen-Erfassungsmusters, eine Bildleseeinrichtung zum Lesen des Musters, und eine Verarbeitungseinrichtung zum Vergleichen einer Ausgabe der Leseeinrichtung mit vorbestimmten Tönungskorrekturkenngrößen, um die mit der Gruppe von Aufzeichnungskopfeinheiten verbundenen Tönungskenngrößen zu bestimmen, umfaßt.

**6.** Einrichtung nach Anspruch 2,
**dadurch gekennzeichnet, daß**

die Tönungskorrekturinformations-Einstelleinrichtung eine Musterausgabeeinrichtung zum Ausgeben eines durch jede der Gruppen aufzuzeichnenden Tönungskenngrößen-Erfassungsmusters, eine Bildleseeinrichtung zum Lesen des Musters, eine Verarbeitungseinrichtung zum Bestimmen einer gewünschten Tönungskorrekturkurve für diese Gruppe auf der Grundlage von Daten von der Bildleseeinrichtung, und eine Signalausgabeeinrichtung zum Ausgeben der gewünschten Tönungskorrekturkurve als die Tönungskorrekturinformation umfaßt.

**7.** Einrichtung nach Anspruch 1,
**dadurch gekennzeichnet, daß**

der Aufzeichnungskopf besondere Tönungs- und Dichtekenngrößen besitzt, und die Einrichtung weiter eine Dichteungleichmäßigkeits-Korrektureinrichtung zum Korrigieren des zu dem Aufzeichnungskopf zu führenden Bildsignals umfaßt, um Ungleichmäßigkeitsdichtekenngrößen des durch die vielen Aufzeichnungselemente aufgezeichneten Bildes im wesentlichen auszugleichen, damit Dichteunterschiede zwischen den Aufzeichnungselementen verringert werden.

8. Einrichtung nach Anspruch 1,
**dadurch gekennzeichnet, daß**

eine Vielzahl von derartigen Aufzeichnungsköpfen und eine Vielzahl von derartigen Tönungskorrektureinrichtungen gebildet sind, und die Gruppen den Aufzeichnungskopf enthalten.

9. Einrichtung nach Anspruch 8,
**dadurch gekennzeichnet, daß**

der Aufzeichnungskopf besondere Tönungs- und Dichtekenngrößen besitzt, und die Einrichtung weiter eine Dichteungleichmäßigkeits-Korrektureinrichtung zum Korrigieren des zu dem Aufzeichnungskopf zu führenden Bildsignals umfaßt, um Ungleichmäßigkeitsdichtekenngrößen des durch die vielen Aufzeichnungselemente aufgezeichneten Bildes im wesentlichen auszugleichen, damit Dichteunterschiede zwischen den Aufzeichnungselementen verringert werden.

10. Einrichtung nach Anspruch 8 oder 9,
**dadurch gekennzeichnet, daß**

die Vielzahl von Aufzeichnungsköpfen viele Aufzeichnungskopfelemente umfaßt, um ein Aufzeichnen in verschiedenen Farben auszuführen, damit ein Farbbild erzeugt wird.

11. Einrichtung nach Anspruch 1,
**dadurch gekennzeichnet, daß**

der Aufzeichnungskopf Punkte aufzeichnet und die Tönung des Bildes durch Ändern einer Anzahl von Punkten in Übereinstimmung mit dem hinzugeführten korrigierten Bildsignal ändert.

12. Einrichtung nach Anspruch 1,
**dadurch gekennzeichnet, daß**

der Aufzeichnungskopf Punkte aufzeichnet und die Tönung des Bildes durch Ändern einer Punktgröße in Übereinstimmung mit dem hinzugefügten korrigierten Bildsignal ändert.

13. Einrichtung nach einem der Ansprüche 1 bis 12,
**dadurch gekennzeichnet, daß**

der Aufzeichnungskopf einen Tintenstrahlaufzeichnungskopf zum Ausstoßen von Tinte durch Ausstoßöffnungen umfaßt.

14. Einrichtung nach Anspruch 13,
**dadurch gekennzeichnet, daß**

jeder Aufzeichnungskopf eine Wärmeenergieerzeugungseinrichtung, die in der Nähe der Ausstoßöffnungen angeordnet ist, umfaßt, um den Zustand der Tinte zu ändern und die Tinte durch die Ausstoßöffnungen auszustoßen.

15. Einrichtung nach einem der Ansprüche 1 bis 14,
**dadurch gekennzeichnet, daß**

die Einrichtung eine Fernkopiereinrichtung ist.

16. Einrichtung nach einem der Ansprüche 1 bis 14,
**dadurch gekennzeichnet, daß**

die Einrichtung eine Kopiereinrichtung ist.

**Revendications**

1. Appareil d'enregistrement d'image, comprenant

une unité formant tête d'enregistrement comprenant une pluralité de groupes (18a, 18b, 18c) comportant chacun une pluralité d'éléments d'enregistrement d'image, ayant des caractéristiques de teinte particulières, en réponse à un signal d'image appliqué à ladite unité formant tête d'enregistrement,
caractérisé en ce que
des moyens (14) de correction de teinte sont utilisés pour corriger le signal d'image destiné à être appliqué auxdits éléments d'enregistrement d'image en fonction d'une information (21a, 21b, 21c) de correction de teinte, de manière à obtenir des caractéristiques de teinte prédéterminées, et
afin d'obtenir des caractéristiques de teinte prédéterminées, une information individuelle de correction de teinte est appliquée à chacun desdits groupes (18a, 18b, 18c), de telle sorte que le signal d'image correspond aux caractéristiques de teinte associées avec ladite unité formant tête d'enregistrement.

2. Appareil selon la revendication 1, comprenant en outre :

un moyen d'établissement d'information de correction de teinte pour établir l'information de correction de teinte.

3. Appareil selon la revendication 2, dans lequel ledit moyen d'établissement d'information de correction de teinte comporte un moyen de génération de signal pour générer un signal de caractéristique de teinte correspondant aux caractéristiques de teinte particulières associées avec ladite unité formant tête d'enregistrement et établit l'information de correction de teinte en fonction du signal de caractéristique de teinte généré par ledit moyen de génération de signal.

4. Appareil selon la revendication 3, dans lequel ledit moyen de génération de signal comprend une ROM montée sur chaque tête d'enregistrement.

5. Appareil selon la revendication 3, dans lequel ledit moyen de génération de signal comprend un moyen de délivrance de configuration pour délivrer une configuration de détection de caractéristique de teinte, destinée à être enregistrée par chacun desdits groupes, un moyen de lecture d'image pour lire la configuration et un moyen de traitement pour comparer une sortie dudit moyen de lecture avec des caractéristiques prédéterminées de correction de teinte pour déterminer les caractéristiques de teinte associées avec ledit groupe de l'unité formant tête d'enregistrement.

6. Appareil selon la revendication 2, dans lequel ledit moyen d'établissement d'information de correction de teinte comprend un moyen de délivrance de configuration pour délivrer une configuration de détection de caractéristique de teinte, destinée à être enregistrée par chacun desdits groupes, un moyen de lecture d'image pour lire la configuration, un moyen de traitement pour déterminer une courbe souhaitée de correction de teinte, pour ce groupe, sur la base de données en provenance dudit moyen de délivrance de signal de fin du moyen de lecture d'image, pour délivrer la courbe souhaitée de correction de teinte en tant qu'information de correction de teinte.

7. Appareil selon la revendication 1, dans lequel ladite tête d'enregistrement a des caractéristiques particulières de teinte et de densité, et comprend en outre un moyen de correction de non uniformité de densité pour corriger le signal d'image destiné à être appliqué à ladite tête d'enregistrement pour compenser sensiblement des caractéristiques de densité non uniformes de l'image enregistrée par lesdits plusieurs éléments d'enregistrement ; de manière à réduire des différences de densité entre lesdits éléments d'enregistrement.

8. Appareil selon la revendication 1, dans lequel sont utilisés une pluralité de telles têtes d'enregistrement et une pluralité de tels moyens de correction de teinte, et lesdits groupes contiennent respectivement ladite tête d'enregistrement.

9. Appareil selon la revendication 8, dans lequel ladite tête d'enregistrement a des caractéristiques particulières de teinte et de densité, et comprend en outre un moyen de correction de non uniformité de densité pour corriger le signal d'image destiné à être appliqué à ladite tête d'enregistrement, pour compenser sensiblement les caractéristiques de densité non uniformes de l'image enregistrée par lesdits plusieurs éléments d'enregistrement ; de manière à réduire des différences de densité entre lesdits éléments d'enregistrement.

10. Appareil selon la revendication 8 ou 9, dans lequel la pluralité de têtes d'enregistrement comprend plusieurs éléments formant tête d'enregistrement pour effectuer un enregistrement en différentes couleurs pour former une image en couleurs.

11. Appareil selon la revendication 1, dans lequel ladite tête d'enregistrement enregistre des points et des variations de la teinte de l'image en modifiant un nombre de points en fonction du signal d'image corrigé appliqué à ceux-ci.

12. Appareil selon la revendication 1, dans lequel ladite tête d'enregistrement enregistre des points et des variations de la teinte de l'image en modifiant la taille des points en fonction du signal d'image corrigé appliqué à ceux-ci.

13. Appareil selon l'une quelconque des revendications 1 à 12, dans lequel ladite tête d'enregistrement comprend une tête d'enregistrement à jet d'encre pour éjecter de l'encre par l'intermédiaire de sorties d'éjection.

14. Appareil selon la revendication 13, dans lequel chaque tête d'enregistrement comporte un moyen de production d'énergie thermique, disposé dans une position adjacente aux sorties d'éjection pour modifier l'état de l'encre et éjecter l'encre par l'intermédiaire des sorties d'éjection.

15. Appareil selon l'une quelconque des revendications 1 à 14, dans lequel ledit appareil est une machine à télécopier.

16. Appareil selon l'une quelconque des revendications 1 à 14, dans lequel ledit appareil est une machine à copier.

FIG. 1

FIG. 2

FIG. 3

11a

11b

11c

12 COLOR CORRECTOR

13a / 14a TONE CORRECTOR (ROM) / 15a / 16a BINARY-CODER / 17a / 18a HEAD

13b / 14b TONE CORRECTOR (ROM) / 15b / 16b BINARY-CODER / 17b / 18b HEAD

13c / 14c TONE CORRECTOR (ROM) / 15c / 16c BINARY-CODER / 17c / 18c HEAD

30 READER

31a
31b
31c

32 RAM

33 CPU

34a
34b
34c

EP 0 430 075 B1

END

SELCT CURVE
OF 1.0 INCLINATION — S1

OUTPUT TONE
DETECTING PATTERN — S2

READ PATTERN
& STORE IT IN RAM — S3

DETERMINE
AVE DENSITY $\bar{C}_m$
FOR RESP. TONE
LEVELS (m:1~10) — S4

CONVERT USING
TONE CORR TABLE — S5

SQUARE ERROR — S6

NO      ALL TABLE? — S7

YES

SELECT MIN.
SQUARE ERROR TABLE — S8

OUTPUT OPTIMUM
SELECTION SIGNAL — S9

END

F I G.  4

20

FIG. 5

PRINTING DUTY  10%  20%  30%  40%  50%  60%  70%  80%  90%  100%

F I G. 6

START

↓

SELECT CURVE
OF 1.0 INCLINATION — S11

↓

OUTPUT TONE
DETECTING PATTERN — S12

↓

READ PATTERN
& STORE IT IN RAM — S13

↓

DETERMINE AVE
DENSITY FOR RESP
TONE LEVELS — S14

↓

DETERMINE IDEAL
CORR CURVE — S16

↓

STORE IDEAL CURVE
IN RAM — S16

↓

END

# FIG. 7

FIG. 8

FIG. 9

FIG. 10

FIG. 11

F I G. 12

EP 0 430 075 B1

FIG. 13

FIG. 14

FIG. 15

```
┌─────────────────────────┐
│      SELECT CURVE       │──── S72
│    OF 1.0 INCLINATION   │
└─────────────────────────┘
            │
            ▼
┌─────────────────────────┐
│   OUTPUT UNUNIFORMITY   │──── S73
│      CORR PATTERN       │
└─────────────────────────┘
            │
            ▼
┌─────────────────────────┐
│    READ THE PATTERN     │──── S74
│   & STORE IT IN RAM     │
└─────────────────────────┘
            │
            ▼
┌─────────────────────────┐
│     CONVERT R-SIG       │
│   TO CYAN DENSITY SIG   │──── S75
│                         │
│   Cn = - log (Rn/Ro)    │
└─────────────────────────┘
            │
            ▼
┌─────────────────────────┐
│  DETERMINE AVE DENSITY  │
│                         │──── S76
│   C̄ = Σ(n=1 to 256) Cn/256 │
└─────────────────────────┘
            │
            ▼
┌─────────────────────────┐
│    DETERMINE DENSITY    │
│      UNUNIFORMITY       │──── S77
│                         │
│      ΔCn = Cn - C̄       │
└─────────────────────────┘
            │
            ▼
┌─────────────────────────┐
│  DETERMINE CORRECTION   │──── S78
│     ΔSn = K × ΔCn       │
└─────────────────────────┘
            │
            ▼
┌─────────────────────────┐
│   DETERMINE SEL SIG     │──── S79
│     FOR CORR LINE       │
└─────────────────────────┘
            │
            ▼
┌─────────────────────────┐
│  STORE SEL SIGNALS FOR  │──── S80
│  256 NOZZLES IN THE RAM │
└─────────────────────────┘
```

# F I G.  16

F I G. 17

F I G. 18

EP 0 430 075 B1

F I G. 19

FIG. 20

FIG. 21

EP 0 430 075 B1

F I G. 22

F I G. 23

FIG. 24A

FIG. 24B

FIG. 24C

FIG. 24D

DENSITY
UNUNIFORMITY
CORRECTION

TONE
CORRECTION

TONE
CORRECTION

IMAGE DENSITY

INPUT SIGNAL

50%

E1

F1

E2

F2

50%

E3

F3

E4

F4

EP 0 430 075 B1

FIG. 25
PRIOR ART

F I G. 26

F I G. 27

## F I G. 28

## F I G. 29